# EUROPEAN PATENT APPLICATION

(11) **EP 4 516 593 A1**
(43) Date of publication of application: **05.03.2025**
(21) Application number: 23815835.6
(22) Date of filing: 19.05.2023
(51) Int. Cl.: B60R 11/02, B60K 35/00, B60R 16/02, G06F 3/0481

(54) **DISPLAY SYSTEM AND WORK VEHICLE**

(30) Priority: 31.05.2022 JP 2022088211
(71) Applicant: Kubota Corporation, Osaka 556-8601 (JP)
(72) Inventor: TAMATANI, Kenji, Sakai-shi, Osaka 590-0908 (JP)
(74) Representative: Cabinet Beau de Loménie
(86) International application number: PCT/JP2023/018796
(87) International publication number: WO 2023/234076

(57) **Abstract**

A display system is to be mounted on a work vehicle including a vibration sensor. The display system includes: a screen; and a controller to control displaying of an image on the screen, the controller generating an image including an input interface to allow a user to perform an input operation and causing the image to be displayed on the screen. The controller changes an indicated position of the input interface on the screen based on a vibration of the work vehicle detected by the vibration sensor.

## Description

### TECHNICAL FIELD

The present disclosure relates to display systems and work vehicles.

### BACKGROUND ART

Techniques have been developed for improving the visual recognition of a video that is being displayed on a screen or a display within a vehicle that may vibrate or tilt because of bumps and dents on the road surface or acceleration/deceleration of the vehicle, etc.

Patent Document 1 discloses a head-up display system that corrects the displayed position of a displayed object based on angular rate information in biaxial directions, such information being acquired from a gyroscope. Patent Document 2 discloses a head-up display device that allows a virtual image to be superposed properly on an actual landscape in accordance with the traveling situation of a vehicle. Patent Document 3 discloses a car navigation system in which vibrations of a user's finger cause a certain range out of a displaying region to be displayed with enlargement.

In all of the techniques disclosed in Patent Documents 1 to 3, an object within the video is shifted in an opposite direction of the direction of a displacement in vibration (i.e., in a direction of canceling out the displacement in vibration), thereby allowing for suppressing incorrect locations of the object as may be caused by the vibration of the vehicle.

### CITATION LIST

### PATENT LITERATURE

Patent Document 1: International Publication No. 2020/084954
Patent Document 2: International Publication No. 2017/134865
Patent Document 3: International Publication No. 2010/064389

### SUMMARY OF INVENTION

### TECHNICAL PROBLEM

When a work vehicle vibrates or tilts, the operability of an input interface to be displayed on a screen is to be improved.

### SOLUTION TO PROBLEM

A display system according to one implementation of the present disclosure is a display system to be mounted on a work vehicle including a vibration sensor, the display system including: a screen; and a controller to control displaying of an image on the screen and generate an image including an input interface to allow a user to perform an input operation and cause the image to be displayed on the screen, wherein the controller changes an indicated position of the input interface on the screen based on a vibration of the work vehicle detected by the vibration sensor.

A work vehicle according to one implementation of the present disclosure includes a vibration sensor and the display system.

General or specific aspects of various example preferred embodiments of the present disclosure may be implemented using a device, a system, a method, an integrated circuit, a computer program, a non-transitory computer-readable storage medium, or any combination thereof. The computer-readable storage medium may be inclusive of a volatile storage medium, or a non-volatile storage medium. The device may include a plurality of devices. In the case where the device includes two or more devices, the two or more devices may be disposed within a single apparatus, or divided over two or more separate apparatuses.

### ADVANTAGEOUS EFFECTS OF INVENTION

According to embodiments of the present disclosure, when a work vehicle vibrates or tilts, the operability of an input interface to be displayed on a screen can be improved.

### BRIEF DESCRIPTION OF DRAWINGS

[FIG. **1**] A diagram showing an example of an operation terminal and an example of operation switches that are provided inside a cabin of a work vehicle.
[FIG. **2**] A block diagram illustrating an exemplary hardware configuration of an operation terminal.
[FIG. **3**] A diagram for describing a coordinate system and displacement components of vibration of a work vehicle according to an embodiment of the present disclosure.
[FIG. **4A**] A diagram showing an example of an image displayed on a screen of the operation terminal in the case of a small shake.
[FIG. **4B**] A diagram showing an example of an image displayed on a screen of the operation terminal in the case of a large shake.
[FIG. **5A**] A diagram showing another example of an image displayed on a screen of the operation terminal in the case of a small shake.
[FIG. **5B**] A diagram showing another example of an image displayed on a screen of the operation terminal in the case of a large shake.
[FIG. **6**] A schematic diagram showing an example configuration of an HUD unit.
[FIG. **7**] A diagram showing work vehicles traveling in a field with ups and downs.
[FIG. **8A**] A diagram showing an example of an image displayed on the screen in the case of a small shake.
[FIG. **8B**] A diagram showing an example of an image displayed on the screen in the case of a large shake.
[FIG. **9A**] A diagram showing another example of an image displayed on the screen in the case of a small shake.
[FIG. **9B**] A diagram showing another example of an image displayed on the screen in the case of a large shake.
[FIG. **10**] A perspective view showing an example appearance of a work vehicle.
[FIG. **11**] A side view schematically showing an example of a work vehicle having an implement attached thereto.
[FIG. **12**] A block diagram showing example configurations of a work vehicle and an implement.
[FIG. **13**] A conceptual diagram showing an example of a work vehicle performing positioning based on an RTK-GNSS.

### DESCRIPTION OF EMBODIMENTS

### (Definition of terms)

In the present disclosure, an "agricultural machine" refers to a machine for agricultural applications. Examples of agricultural machines include tractors, harvesters, rice transplanters, vehicles for crop management, vegetable transplanters, mowers, seeders, spreaders, and mobile robots for agriculture. Not only may a work vehicle such as a tractor function as an "agricultural machine" alone by itself, but also a combination of a work vehicle and an implement that is attached to, or towed by, the work vehicle may function as an "agricultural machine". For the ground surface inside a field, the agricultural machine performs agricultural work such as tilling, seeding, preventive pest control, manure spreading, planting of crops, or harvesting. Such agricultural work or tasks may be referred to as "groundwork", or simply as "work" or "tasks". Travel of a vehicle-type agricultural machine performed while the agricultural machine also performs agricultural work may be referred to as "tasked travel".

"Self-driving" refers to controlling the movement of an agricultural machine by the action of a controller, rather than through manual operations of a driver. An agricultural machine that performs self-driving may be referred to as a "self-driving agricultural machine" or a "robotic agricultural machine". During self-driving, not only the movement of the agricultural machine, but also the operation of agricultural work (e.g., the operation of the implement) may be controlled automatically. In the case where the agricultural machine is a vehicle-type machine, travel of the agricultural machine via self-driving will be referred to as "self-traveling". The controller may be configured or programmed to control at least one of: steering that is required in the movement of the agricultural machine; adjustment of the moving speed, or beginning and ending of a move. In the case of controlling a work vehicle having an implement attached thereto, the controller may control raising or lowering of the implement, beginning and ending of an operation of the implement, and so on. A move based on self-driving may include not only moving of an agricultural machine that goes along a predetermined path toward a destination, but also moving of an agricultural machine that follows a target of tracking. An agricultural machine that performs self-driving may also move partly based on the user's instructions. Moreover, an agricultural machine that performs self-driving may operate not only in a self-driving mode but also in a manual driving mode, where the agricultural machine moves through manual operations of the driver. When performed not manually but through the action of a controller, the steering of an agricultural machine will be referred to as "automatic steering". A portion of, or the entirety of, the controller may reside outside the agricultural machine. Control signals, commands, data, etc., may be communicated between the agricultural machine and a controller residing outside the agricultural machine. An agricultural machine that performs self-driving may move autonomously while sensing the surrounding environment, without any person being involved in the controlling of the movement of the agricultural machine. During an autonomous move, operations of detecting and avoiding obstacles may be performed.

An "environment map" is data representing, with a predetermined coordinate system, the position or the region of an object existing in the environment where the agricultural machine moves. The environment map may be referred to simply as a "map" or "map data". The coordinate system defining the environment map is, for example, a world coordinate system such as a geographic coordinate system fixed to the globe. Regarding an object existing in the environment, the environment map may include information other than the position (e.g., attribute information or other types of information). The "environment map" encompasses various type of maps such as a point cloud map and a grid map. Data on a local map or a partial map that is generated or processed in a process of constructing the environment map is also referred to as a "map" or "map data".

An "agricultural road" is a road used mainly for agriculture. An "agricultural road" is not limited to a road paved with asphalt, and encompasses unpaved roads covered with soil, gravel or the like. An "agricultural road" encompasses roads (including private roads) on which only vehicle-type agricultural machines (e.g., work vehicles such as tractors, etc.) are allowed to travel and roads on which general vehicles (cars, trucks, buses, etc.) are also allowed to travel. The work vehicles may automatically travel on a general road in addition to an agricultural road. The "general road" is a road maintained for traffic of general vehicles.

### (embodiments)

Hereinafter, preferred embodiments of the present disclosure will be described more specifically. Note however that unnecessarily detailed descriptions may be omitted. For example, detailed descriptions on what is well known in the art or redundant descriptions on what is substantially the same configuration may be omitted. This is to avoid lengthy description, and facilitate the understanding of those skilled in the art. The accompanying drawings and the following description, which are provided by the present inventors so that those skilled in the art can sufficiently understand the present disclosure, are not intended to limit the scope of claims. In the following description, component elements having identical or similar functions are denoted by identical reference numerals.

The following preferred embodiments are only exemplary, and the techniques according to the present disclosure are not limited to the following preferred embodiments. For example, numerical values, shapes, materials, steps, and orders of steps, layout of a display screen, etc., that are indicated in the following preferred embodiments are only exemplary, and admit of various modifications so long as it makes technological sense. Any one implementation may be combined with another so long as it makes technological sense to do so.

A display system according to an embodiment of the present disclosure is to be mounted on a work vehicle including a vibration sensor. The work vehicle is capable of human driving, and can perform both of manual driving and self-driving. The display system includes a screen and a controller. Examples of the vibration sensors may be a gyroscope, an acceleration sensor, a combination of a gyroscope and an acceleration sensor, or an inertial measurement unit (IMU). For example, a touch screen panel of an operation terminal, a windshield (or a front panel) of a work vehicle or a combiner of an HUD that renders into view a virtual image created by a head-up display (hereinafter referred to as "HUD"), or the like can function as the screen of the display system.

The controller is configured to control displaying of an image on the screen, generate an image including an input interface to allow a user to perform an input operation, and cause the image to be displayed on the screen. The controller changes an indicated position of the input interface on the screen based on a vibration of the work vehicle detected by the vibration sensor. For example, when the magnitude of vibration of the work vehicle as detected by the vibration sensor is below a threshold, the controller keeps the indicated input interface stationary at a first predetermined position on the screen, and moves the indicated input interface from the first predetermined position when the magnitude of vibration of the work vehicle is equal to or above the threshold. A magnitude of vibration indicates the magnitude of a velocity, an acceleration, or a displacement of vibration. Unless otherwise specified, the magnitude of vibration in the embodiments of the present disclosure means the magnitude of a displacement in vibration (amount of displacement).

When the magnitude of vibration of the work vehicle is equal to or above the threshold, the controller according to an embodiment of the present disclosure moves the indicated input interface from the first predetermined position in the same direction as the direction of a displacement in vibration of the work vehicle. Thus, by shifting the indicated input interface in the video in the same direction as the direction of a displacement in vibration, when the work vehicle vibrates or tilts, the input interface displayed on the screen may have an improved operability.

### [1. display system]

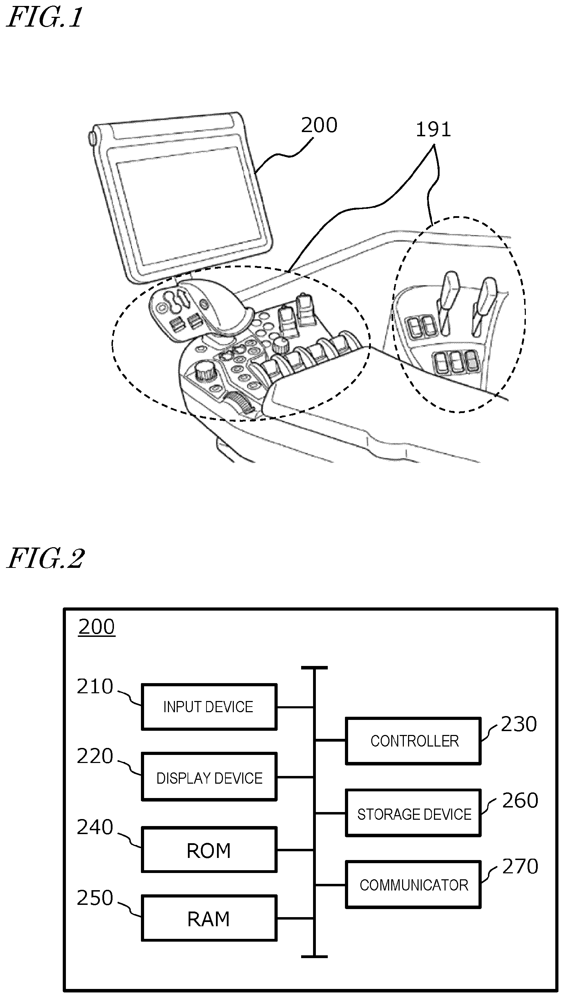

FIG. **1** is a diagram showing an example of an operation terminal **200** and an example of operation switches **191** that are provided inside a cabin of a work vehicle. FIG. **2** is a block diagram illustrating an exemplary hardware configuration of the operation terminal **200.**

Inside the cabin, the operation switches **191,** including a plurality of switches that are manipulable by the user, are provided. The operation switches **191** may include, for example, a switch to select the gear shift as to a main gear shift or a range gear shift, a switch to switch between a self-driving mode and a manual driving mode, a switch to switch between forward travel and backward travel, a switch to switch between four-wheel drive and two-wheel drive, a switch to disengage the link between the right and left brakes, a switch to raise or lower the implement, and the like.

The operation terminal **200** is a terminal to allow a user to perform manipulations related to the travel of the work vehicle and the operation of the implement, and is also referred to as a virtual terminal (VT). The operation terminal **200** may include a display device of a touch screen panel type, and/or one or more buttons. The display device may be a display, e.g., a liquid crystal or organic light-emitting diode (OLED). By manipulating a touch screen panel of the operation terminal **200,** the user can perform various manipulations, such as switching the self-driving mode ON or OFF, switching the remote operation mode ON or OFF, recording or editing of an environment map, setting a target path, changing an amount of control for the work vehicle, e.g., a vehicle speed or a number of engine revolutions, and switching the implement ON or OFF, for example. At least some of these manipulations may also be realized by manipulating the operation switches **191.** The operation terminal **200** may be configured to be detachable from the work vehicle. A user who is at remote place from the work vehicle may manipulate the detached operation terminal **200** to control the operation of the work vehicle.

Instead of the operation terminal **200,** a laptop computer may be disposed inside the cabin, the laptop computer including a touch screen panel and having necessary application software installed thereon to change the position of the indicated input interface on the screen based on a vibration of the work vehicle detected by the vibration sensor. Alternatively, a mobile terminal such as a smartphone or a tablet computer having the aforementioned application software installed thereon, etc., may be disposed inside the cabin.

The operation terminal **200** shown in FIG. **2** includes an input device **210,** a display device **220,** a controller **230,** a ROM 240, a RAM **250,** a storage device **260,** and a communicator **270.** These component elements are communicably connected to one another via a bus.

The input device **210** is a device to convert an instruction from the user into data and input the data to a computer. The input device **210** may be, for example, a keyboard or a mouse. The display device **220** may be, for example, a liquid crystal display or an organic EL display. The display device **220** includes a touch screen panel, and not only functions to display video, but also functions as the input device **210.**

The controller **230** includes a processor. The processor is a semiconductor integrated circuit including a central processing unit (CPU), for example. The processor may be implemented as a microprocessor or a microcontroller. Alternatively, the processor may be implemented as an FPGA (Field Programmable Gate Array), a GPU (Graphics Processing Unit), an ASIC (Application Specific Integrated Circuit), or an ASSP (Application Specific Standard Product) incorporating a CPU; or a combination of two or more circuits selected from among such circuits. The processor consecutively executes a computer program in which instructions for performing at least one process are stated, this being stored in the ROM **240,** and realizes a desired process.

The ROM **240** is, for example, a writable memory (e.g., PROM), a rewritable memory (e.g., flash memory) or a read-only memory. The ROM **240** stores a program to control operations of the processor. The ROM **240** does not need to be a single storage medium, and may be an assembly of a plurality of storage mediums. A portion of the assembly of the plurality of storage media may be a removable memory.

The RAM **250** provides a work area in which the control program stored in the ROM **240** is once laid out at the time of boot. The RAM **250** does not need to be a single storage medium, and may be an assembly of a plurality of storage mediums.

The storage device **260** may be, for example, a magnetic storage device or a semiconductor storage device. An example of the magnetic storage device is a hard disk drive (HDD). An example of the semiconductor storage device is a solid state drive (SSD).

The communicator **270** is a communication module to communicate with, for example, a cloud server that keeps agricultural work under management, a work vehicle, or a terminal device that may be used by the user (farm manager, agricultural worker, etc.) via a network. The communicator **270** can perform wired communication in compliance with communication standards such as, for example, IEEE1394 (registered trademark) or Ethernet (registered trademark). The communicator **270** may perform wireless communication in compliance with the Bluetooth (registered trademark) or Wi-Fi standards, or cellular mobile communication based on 3G, 4G, 5G or any other cellular mobile communication standard.

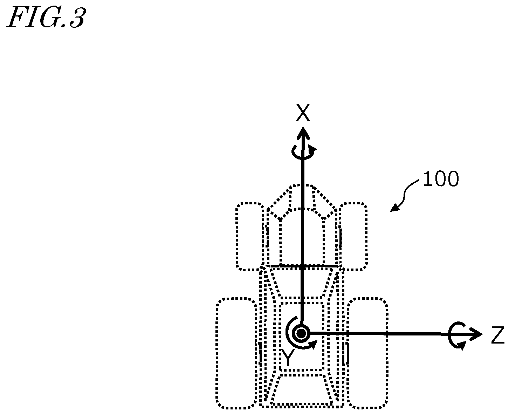

FIG. **3** is a diagram for describing a coordinate system and displacement components of vibration of the work vehicle **100.** An XYZ coordinate system with three axes that are orthogonal to one another is shown in FIG. **3****.** A vibration that may occur in the work vehicle **100** can be expressed as displacement components in directions along the X, Y, and Z axes and a rotational component around each axis. The X axis extends along the front-rear direction of the work vehicle **100.** The Y axis extends along the top-bottom (vertical) direction of the work vehicle **100.** The Z axis extends along the right-left direction of the work vehicle **100.** Translations along the X, Y, and Z axes without involving rotation are called, respectively, a front-rear displacement (X), an up-down displacement (Y), and a right-left displacement (Z). Rotational displacement includes rolling, pitching, and yawing. Rotation around the X axis is called rolling, rotation around the Y axis yawing, and rotation around the Z axis pitching.

In the present specification, when a work vehicle vibrates or tilts, it may be said that "the work vehicle shakes". A work vehicle may shake due to bumps and dents on the road surface of off-road terrain, including fields, acceleration/deceleration or turning of the vehicle, etc., for example. A shake may be expressed in terms of translations along the three axes, rotational displacements along the three axes, or any combination thereof. In embodiments of the present disclosure, among others, a shake that is expressed in terms of a right-left displacement (Z), rolling, or a combination thereof is referred to as a "lateral shake", and a shake that is expressed in terms of an up-down displacement (Y), pitching, or a combination thereof is referred to as a "vertical shake".

As described below, a work vehicle according to an embodiment of the present disclosure includes an IMU as a vibration sensor. An IMU includes an acceleration sensor and a gyroscope. The acceleration sensor measures translations along the aforementioned three axes. The gyroscope measures rotational displacements along the aforementioned three axes. For example, taking a first-order integral of accelerations along the Y axis direction that are measured by the acceleration sensor produces a velocity, and taking a first-order integral of velocities produces an up-down displacement (Y). Taking a first-order integral of angular rates of rotation around the Z axis measured by the gyroscope produces an angle of rotation. Thus, with the IMU, tilt and vibration of the work vehicle can be measured.

Hereinafter, an example operation of the controller when a lateral shake or a vertical shake occurs will be described. However, when the work vehicle actually travels on off-road terrain, shakes may occur in any direction. In an embodiment of the present disclosure, the magnitude of a shake is distinguished against a threshold. A shake whose magnitude of displacement in vibration (or whose magnitude of vibration) is below a threshold is referred to, in relative terms, as "a small shake"; a shake whose magnitude of displacement in vibration is equal to or greater than the threshold is referred to as "a large shake" in relative terms. In the case of a large shake, the shake of the work vehicle has a frequency on the order of several Hz to several ten Hz, for example. Therefore, a driver sitting in the driver's seat may be shaken to a relatively large extent by the shake of the work vehicle.

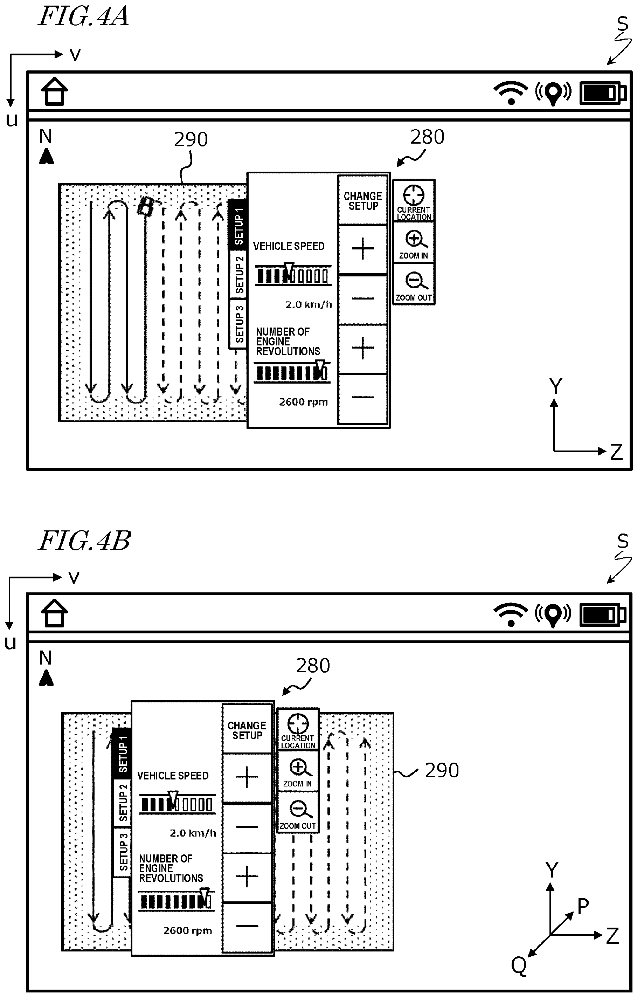

FIG. 4A is a diagram showing an example of an image displayed on the screen **S** of the operation terminal **200** in the case of a small shake. FIG. **4B** is a diagram showing an example of an image displayed on the screen **S** of the operation terminal **200** in the case of a large shake. In each of FIG. **4A** and FIG. **4B** is shown a uv coordinate system which is fixed on the screen **S,** with two axes whose origin is at an upper left portion of the screen **S.** For reference sake, the Y axis and the Z axis of the XYZ coordinate system of the work vehicle are also shown. In embodiments of the present disclosure, for convenience of explanation, the direction in which the u axis extends is parallel to the direction in which the Y axis extends, and the direction in which the v axis extends is parallel to the direction in which the Z axis extends.

The screen **S** in the illustrated example is a touch screen panel. The image on the screen **S** includes an input interface **280** to allow a user to perform an input operation. The input interface **280** includes an input section with which to input at least one kind of information among information on the work vehicle, information on travel by the work vehicle, and information on work to be performed by the work vehicle. The information on the work vehicle includes vehicle speed (km/h), tilling depth (cm), and number of engine revolutions (rpm), for example. The information on travel by the work vehicle includes setting of a target path, correction of a target path, switching ON/OFF of the self-driving mode, and emergency stop, for example. Examples of the information on work to be performed by the work vehicle may include a work plan, the kind of task to be performed by the implement, or the like.

The image on the screen **S** may further include an indication **290** of at least one kind of information among information on the work vehicle, information on travel by the work vehicle, and information on work to be performed by the work vehicle. Hereinafter, indications of such information will simply be denoted as the "indication **290".** In addition to the aforementioned examples, the information on the work vehicle included in the indication **290** may include remaining fuel amount (%), water temperature (C°), transmission oil temperature (C°), and the like, for example. An example of the information on travel by the work vehicle included in the indication **290** is positional information of a work vehicle that travels along a target path which is set for a field. The image on the screen **S** in the illustrated example includes an indication **290** of a map image that shows the current position of the work vehicle. An example of the information on work to be performed by the work vehicle included in the indication **290** is a work history. The image on the screen **S** may further include a camera video that is captured by a camera that is mounted on the work vehicle and the like.

The controller **230** controls displaying of an image on the screen **S.** The controller **230** generates an image including the input interface **280,** and causes the image to be displayed on the screen **S.** The controller **230** may generate an image that further includes the indication **290.**

The input interface **280** illustrated in FIG. **4A** includes buttons that are input sections for zooming in or zooming out on the display and buttons to change settings to change the respective ones of vehicle speed and number of engine revolutions. By touching the touch screen panel to manipulate the +/- buttons or the zoom in/zoom out buttons, the user can perform a desired manipulation. However, the image on the screen **S** that is illustrated in FIG. **4A** is only an example, and may include various video indications as aforementioned.

Based on a vibration of the work vehicle detected by the vibration sensor, the controller **230** changes the position of the indicated input interface **280** on the screen **S.** To be more specific, when the magnitude of vibration of the work vehicle as detected by the vibration sensor (e.g., amount of displacement in vibration) is below a threshold, i.e., in the case of a small shake, the controller **230** keeps the indicated input interface **280** stationary at a first predetermined position on the screen **S.** The threshold may be set in a range from 5 cm to 10 cm, for example. However, this range for the threshold is only an example, and it is not limiting. For example, the indicated input interface **280** may be moved when a vibration of the work vehicle occurs. Furthermore, when the magnitude of vibration of the work vehicle is below the threshold, the controller **230** keeps the indication 290 stationary at a second predetermined position on the screen **S.** Thus, even if the work vehicle has been displaced in a certain direction, if the magnitude of vibration is below the threshold, the controller **230** keeps the indicated input interface **280** and the indication **290** stationary at, respectively, the first and second predetermined positions.

In the example shown in FIG. **4A****,** in the case of a small shake, the input interface **280** is located essentially in the center of the screen **S.** In this example, the first predetermined position on the screen **S** is essentially the center of the screen **S.** A large portion of the indication **290** is located in the left-hand region of the screen **S.** In this example, the second predetermined position on the screen **S** is located to the left of the center of the screen. However, neither the first nor the second predetermined position is limited to the illustrated example. Each of the first and second predetermined positions is identified by position coordinates in the uv coordinate system.

A space to allow movements of the input interface **280** are kept above and below and to the right and the left of the input interface **280** of the screen **S.** The input interface **280** in the illustrated example is displayed at the frontmost, with a portion thereof overlapping a portion of the indication **290.** Displaying the input interface **280** at the frontmost allows for improving the operability of the input interface **280.**

When the magnitude of vibration of the work vehicle is equal to or above the threshold, i.e., in the case of a large shake, the controller **230** moves the indicated input interface **280** from the first predetermined position. More specifically, in the case of a large shake, the controller **230** moves the indicated input interface **280** from the first predetermined position in the same direction as the direction of a displacement in vibration of the work vehicle. The amount of movement of the input interface **280** may be determined in accordance with the amount of displacement and the size of the margins on the screen **S** above and below and to the right and the left of the input interface **280,** for example.

FIG. **4B** shows an example of an image displayed on the screen **S** in a case where a lateral shake occurs. For example, if the work vehicle is displaced in the -Z direction and the magnitude of vibration is equal to or above the threshold, the controller **230** moves the indicated input interface **280** from the first predetermined position in the same direction as the direction of a displacement in vibration of the work vehicle (-Z direction), i.e., in the -v direction. As a result, because of a lateral shake of the work vehicle, the input interface **280** moves in the -v direction from the first predetermined position illustrated in FIG. **4A****.** In another example, if the work vehicle is displaced in the +Z direction and the magnitude of vibration is equal to or above the threshold, the controller **230** moves the indicated input interface **280** from the first predetermined position in the +v direction. Or, if the work vehicle is displaced in an upper right direction (in the P direction as illustrated) and the magnitude of vibration is equal to or above the threshold, the controller **230** moves the indicated input interface **280** from the first predetermined position in the P direction as illustrated.

If the magnitude of vibration is equal to or above the threshold, i.e., in the case of a large shake, a driver sitting in the driver's seat is shaken to a relatively large extent with a low frequency. For example, the driver may make a turning operation at a headland while changing the speed or the number of engine revolutions. However, the work vehicle is liable to shake during a turn at a headland, and therefore the operability of the input interface displayed on the screen has not necessarily been good.

According to an embodiment of the present disclosure, in the case of a large shake, the controller **230** moves the indicated input interface **280** from the first predetermined position in the same direction as the direction of a displacement in vibration of the work vehicle. As a result, the input interface **280** moves in the direction of a displacement in vibration of the work vehicle. This can make it easier for a driver who is shaken by a vibration or a tilt of the work vehicle to manipulate the input interface **280** displayed on the screen **S** with a finger, for example.

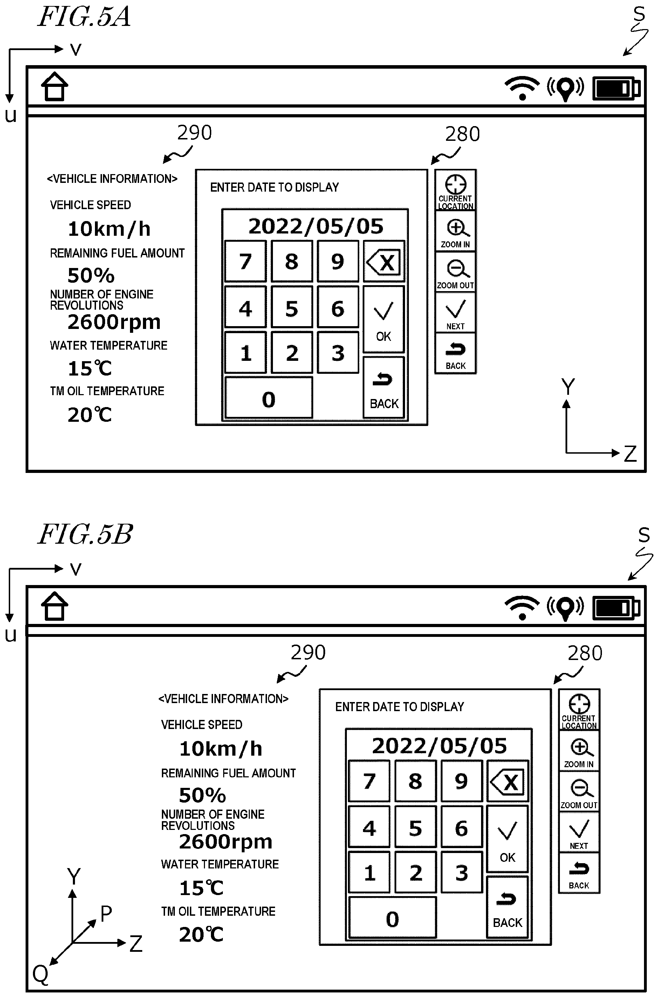

FIG. **5A** is a diagram showing another example of an image displayed on the screen **S** of the operation terminal **200** in the case of a small shake. FIG. **5B** is a diagram showing another example of an image displayed on the screen of the operation terminal **200** in the case of a large shake. A uv coordinate system is shown in each of FIG. **5A** and FIG. **5B****,** and also the Y axis and the Z axis of the XYZ coordinate system of the work vehicle are shown for reference sake.

The image on the screen **S** in the illustrated example includes the input interface **280** and the indication **290.** The input interface **280** includes ten keys for the user to input a number. The indication **290** includes information on the work vehicle.

In the example shown in FIG. **5A****,** in the case of a small shake, the input interface **280** is located essentially in the center of screen. In this example, the first predetermined position on the screen **S** is essentially the center of the screen **S.** The indication **290** is located in the left-hand region of the screen **S.** In this example, the second predetermined position on the screen **S** is located to the left of the center of the screen. However, neither the first nor the second predetermined position is limited to the illustrated example. As in the example shown in FIG. **4A****,** a space to allow movements of the input interface **280** are kept above and below and to the right and the left of the input interface **280** on the screen **S.**

FIG. **5B** shows an example of an image displayed on the screen **S** in a case where a lateral shake occurs. For example, if the work vehicle is displaced in the +Z direction and the magnitude of vibration is equal to or above the threshold, the controller **230** moves the indicated input interface **280** from the first predetermined position in the same direction as the direction of a displacement in vibration of the work vehicle (+Z direction), i.e., in the +v direction. As a result, because of a lateral shake of the work vehicle, the input interface **280** moves in the +v direction from the first predetermined positioned in FIG. **5A****.**

When the magnitude of vibration of the work vehicle is equal to or above the threshold, i.e., in the case of a large shake, the controller **230** may move the indication **290** in the same direction as the direction of a displacement in vibration of the work vehicle from the second predetermined position. As illustrated in FIG. **5B****,** if the work vehicle is displaced in the +Z direction and the magnitude of vibration is equal to or above the threshold, the controller **230** may move the indication **290** in the +v direction from the second predetermined position. In this example, because of a lateral shake of the work vehicle, the indication **290** also moves in the +v direction from the first predetermined position illustrated in FIG. **5A****.** Or, if the work vehicle is displaced in an upper right direction (in the P direction as illustrated) and the magnitude of vibration is equal to or above the threshold, the controller **230** may move the indication **290** in the P direction as illustrated, from the second predetermined position. The amount of movement of the indication **290** may be determined in accordance with the amount of displacement and the size of the margins on the screen **S** above and below and to the right and the left of the input interface **290,** for example. The amount of movement of the input interface **280** and the amount of movement of the indication 290 may be the same or different from each other.

A display system according to an embodiment of the present disclosure may include a light source to be controlled by the controller and optics to create a virtual image ahead of the screen in response to received light that is emitted from the light source. In other words, the display system may include an HUD. HUDs that render information for viewing on a person's field of view are used in assisting driving, by displaying information on the windshield of a vehicle.

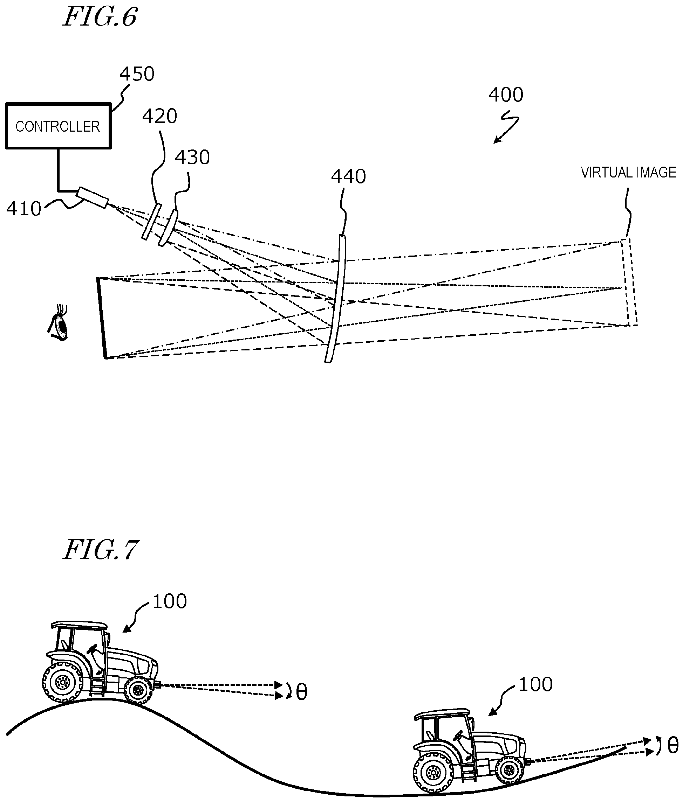

FIG. **6** is a schematic diagram showing an example configuration of an HUD unit. As one approach to HUD, an approach using virtual image optics is described below. However, the configuration of the HUD unit is not limited to the example shown in FIG. **6****.**

The HUD unit **400** includes a light source **410,** a transmission-type screen **420,** a field lens **430,** and a combiner **440.** The optics of the HUD unit **400** includes the transmission-type screen **420,** the field lens **430,** and the combiner **440,** and may further include an MEME mirror(s), a movable lens(es) and the like. The HUD unit **400** is attached to a ceiling surface of the roof inside the cabin of the work vehicle, for example.

A light beam that is emitted from the light source **410** is converged by the transmission-type screen **420** to create a real image. The transmission-type screen **420** functions as a secondary light source which emits the converged light beam toward the combiner **440** so as to result in a substantially rectangular irradiated area. The combiner **440** forms a virtual image based on the radiated light beam. As a result, together with the landscape, the driver is able to recognize a video through the combiner **440.**

The light source **410** is a device that performs video rendering. The light source **410** is configured to emit display light toward the transmission-type screen **420.** Known examples of approaches to rendering are methods based on DLP (Digital Light Processing) and approaches using a laser projector. The light source **410** may include a laser projector and a MEME mirror(s) to achieve scanning with the light beam emitted from the laser projector. An example of the laser projector is an RGB laser projector.

The transmission-type screen **420** includes a microlens array at the light-receiving surface side. The transmission-type screen **420** performs the function of broadening the incident beam. The field lens **430** is disposed between the transmission-type screen **420** and the combiner **440,** so as to be near the transmission-type screen **420.** The field lens **430** is composed of a convex lens, for example, and changes the direction of travel of the light beam emitted from the transmission-type screen **420.** Use of the field lens **430** can further enhance the efficiency of light utilization. However, the field lens **430** is not essential.

Although a half mirror is generally used as the combiner **440,** for example, a hologram element or the like may instead be used. The combiner **440** reflects a divergent light beam from the transmission-type screen **420** and forms a virtual image of light. The combiner **440** has the function of causing the video formed at the transmission-type screen **420** to be displayed in an enlarged form at a farther distance, and the function of displaying the video as an overlay on the landscape. Hereinafter, the combiner **440** may sometimes be referred to as the screen. As a result of this, the driver is able to recognize the video through the combiner **440,** together with the landscape. In other words, together with the landscape, the driver can recognize a video that is rendered on the screen. Depending on the curvature of the combiner **440,** the size of the virtual image or the position at which the virtual image is created can be changed.

The controller **450** is identical in structure to the aforementioned controller **230** of the operation terminal **200,** and is configured to perform the same function. Therefore, any detailed description thereof is omitted.

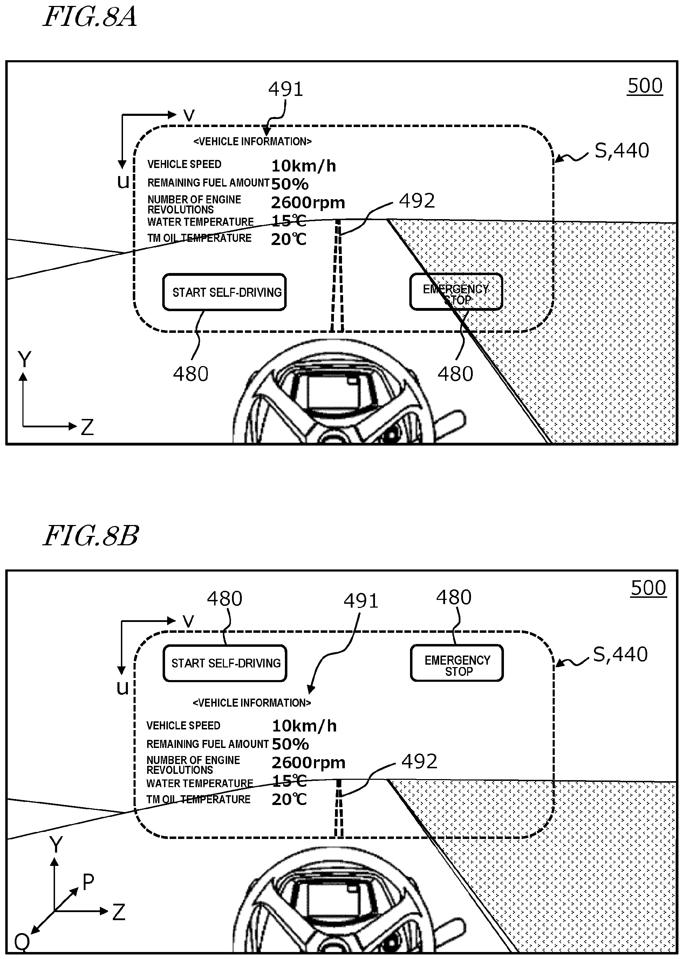

FIG. **8A** is a diagram showing an example of an image displayed on the screen **S** in the case of a small shake. FIG. **8B** is a diagram showing an example of an image displayed on the screen **S** in the case of a large shake. A uv coordinate system is shown in each of FIG. **8A** and FIG. **8B****,** and also the Y axis and the Z axis of the XYZ coordinate system of the work vehicle are shown for reference sake.

The screen **S** in the illustrated example is the combiner 440 of the HUD unit **400.** However, instead of a combiner, the windshield of the work vehicle may function as the screen, as will be described below. The image on the screen **S** includes an input interface **480** to allow a user to perform an input operation. The input interface **480** in the illustrated example includes an operation button to instruct the work vehicle to begin self-driving, and an operation button for causing an emergency stop of the work vehicle which is traveling via self-driving. The image on the screen **S** in the illustrated example further includes an indication **491** of information on the work vehicle (hereinafter simply referred to as the "indication **491**") and an indication **492** of information on travel by the work vehicle (hereinafter simply referred to as the "indication **492**"). In this example, the indication **492** is a line indication that represents a target path. The input interface **480,** the indication **491,** and the indication **492** are superposed on the external landscape of the windshield **500.** Among these indications, the input interface **480** may be displayed at the frontmost.

In an embodiment of the present disclosure, the input interface **480** (e.g., an operation button) being displayed on the screen **S** can be remotely manipulated. For example, the display system may include an infrared camera for detecting a line of sight of the driver. The infrared camera is disposed at an upper portion of the windshield **500** so as to be located ahead of the driver. The controller **450** processes data that is output from the infrared camera in order to detect the driver's line of sight. Upon detecting that the driver's line of sight is directed to an operation button displayed on the screen **S,** the controller **450** can cause the work vehicle to perform a predetermined operation that is assigned to that operation button. An example of a remote operation algorithm based on the driver's line of sight is described in Japanese Laid-Open Patent Publication No. 2022-72453. The entire disclosure of Japanese Laid-Open Patent Publication No. 2022-72453 is incorporated herein by reference.

In the example shown in FIG. **8A****,** in the case of a small shake, the input interface **480** is located in a lower portion of the screen **S.** In this example, the first predetermined position on the screen **S** is the lower portion of the screen **S.** The indication **491** is located in an upper region on the left-hand side of the screen **S.** In this example, the second predetermined position on the screen **S** is located in the upper region on the left-hand side of the screen **S.** However, neither the first nor the second predetermined position is limited to the illustrated example. The indication **492** is displayed along a target path that is set on the ground surface of the field.

FIG. **7** is a diagram showing work vehicles **100** traveling in a field with ups and downs. On the right side and the left side of FIG. **7****,** respectively, work vehicles **100** that are at an ascending slope and a descending slope are illustrated. The work vehicles **100** shown on the right side and the left side of FIG. **7** undergo pitching by an angle **θ**, in a looking-up direction and a looking-down direction, respectively. FIG. **8A** and FIG. **8B** illustrate examples of superposed images before and after, respectively, the work vehicle **100** shown on the right side of FIG. **7** begins on the ascending slope.

FIG. **8B** shows an example of an image displayed on the screen **S** in a case where a vertical shake occurs. As shown in FIG. **7****,** if the work vehicle is displaced in the +Y direction (looking-up direction) due to pitching and the magnitude of vibration is equal to or above the threshold, the controller **450** moves the indicated input interface **480** from the first predetermined position in the same direction as the direction of a displacement in vibration of the work vehicle (+Y direction), i.e., in the -u direction. As a result, because of the vertical shake of the work vehicle, the input interface **480** moves from the lower portion to the upper portion of the screen **S.** In another example, if the work vehicle is displaced in an upper right direction (in the P direction as illustrated) and the magnitude of vibration is equal to or above the threshold, the controller **450** moves the indicated input interface **480** from the first predetermined position in the P direction as illustrated.

When the magnitude of vibration of the work vehicle is equal to or above the threshold, the controller **450** may move each of the indication **491** and the indication **492** from the second predetermined position in an opposite direction of the direction of a displacement in vibration of the work vehicle. In other words, the controller **450** may move each of the indication **491** and the indication **492** from the second predetermined position in a direction of canceling out the displacement in vibration. This allows the displayed position of each of the indication **491** and the indication **492** to be maintained with respect to the landscape. The amounts of movements of the indication **491** and the indication **492** are determined based on the amount of displacement in vibration.

As illustrated in FIG. **7****,** if the work vehicle is displaced in the +Y direction (looking-up direction) due to pitching, and the magnitude of vibration is equal to or above the threshold, the controller **450** may move each of the indication **491** and the indication **492** from the second predetermined position in an opposite direction of the direction of a displacement in vibration of the work vehicle (+Y direction), i.e., in the +u direction. As a result, because of the vertical shake of the work vehicle, each of the indication **491** and the indication **492** moves in an opposite direction of the direction in which the input interface **480** moves. In another example, if the work vehicle is displaced in a lower left direction (in the Q direction as illustrated) and the magnitude of vibration is equal to or above the threshold, the controller **450** may move each of the indication **491** and the indication **492** in an upper right direction (in the P direction as illustrated) from the second predetermined position.

With the HUD unit **400** according to the embodiment of the present disclosure, in the case of a large shake, the controller **450** moves the indicated input interface **480** from the first predetermined position in the same direction as the direction of a displacement in vibration of the work vehicle. As a result, the input interface **480** moves in the direction of a displacement in vibration of the work vehicle. This can make it easier for a driver who is shaken by a vibration or a tilt of the work vehicle to manipulate the input interface **480** indicated on the screen **S** with a line of sight, for example. Furthermore, in the case of a large shake, the controller **450** may move each of the indication **491** and the indication 492 in an opposite direction of the direction of a displacement in vibration of the work vehicle from the second predetermined position. This is advantageous for being able to reduce a superposition offset of the indication **491** with respect to the landscape, and particularly advantageous in terms of being able to reduce a superposition offset of the indication **492** with respect to the ground surface of the field.

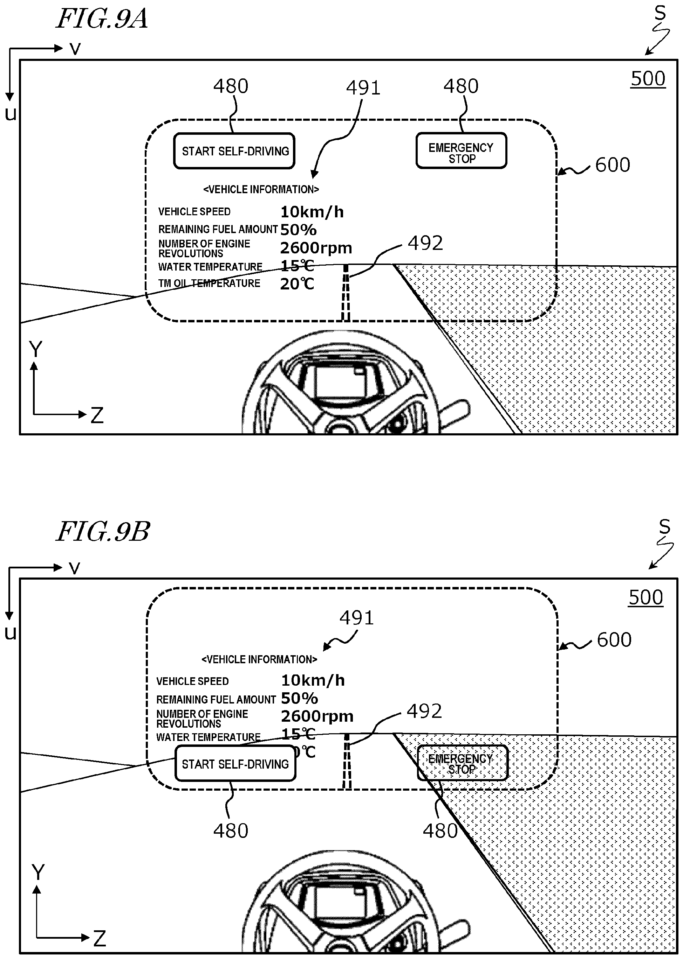

FIG. **9A** is a diagram showing another example of an image displayed on the screen **S** in the case of a small shake. FIG. **9B** is a diagram showing another example of an image displayed on the screen **S** in the case of a large shake. A uv coordinate system is shown in each of FIG. **9A** and FIG. **9B****,** and also the Y axis and the Z axis of the XYZ coordinate system of the work vehicle are shown for reference sake. FIG. **9A** and FIG. **9B** illustrate examples of superposed images before and after, respectively, the work vehicle **100** shown on the left side of FIG. **7** begins on the descending slope.

The windshield **500** in the illustrated example functions as the screen **S.** In this example, unlike in the example shown in FIG. **8B****,** in the case of a large shake, the controller **450** dynamically changes the position of the displaying region **600** of a video in the uv coordinate system of the screen **S.** In other words, in response to a shake of the work vehicle, the controller **450** dynamically changes the relative position of the displaying region **600** with respect to the windshield **500.** The movement of the displaying region **600** on the screen **S** can be achieved by changing the angle(s) of e.g. the MEMS mirror(s) and/or movable lens(es) that are included in the optics of the HUD unit **400.**

FIG. **9B** shows an example of an image displayed on the screen **S** in a case where in a case where a vertical shake occurs. As shown in FIG. **7****,** if the work vehicle is displaced in the -Y direction (looking-down direction) due to pitching and the magnitude of vibration is equal to or above the threshold, the controller **450** moves the indicated input interface **480** from the first predetermined position in the same direction as the direction of a displacement in vibration of the work vehicle (-Y direction), i.e., in the +u direction. As a result, from the standpoint of the uv coordinate system, with a vertical shake of the work vehicle, the input interface **480** moves downward from the first predetermined position shown in FIG. **9A****.** From the standpoint of the displaying region **600,** too, the input interface **480** moves downward from the first predetermined position shown in FIG. **9A****.** Furthermore, the controller **450** may move each of the indication **491** and the indication **492** from the second predetermined position in an opposite direction of the direction of a displacement in vibration of the work vehicle (-Y direction), i.e., in the -u direction. As a result, from the standpoint of the uv coordinate system, each of the indication **491** and the indication **492** moves upward from the second predetermined position shown in FIG. **9A****.** On the other hand, from the standpoint of the displaying region **600,** the displayed position of each of the indication **491** and the indication **492** does not change before and after the displacement. As illustrated in FIG. **9B****,** when the input interface **480** and the indication **491** overlap each other, the input interface **480** may be displayed at the frontmost.

### [2. example configuration of agricultural machine]

A work vehicle according to an embodiment of the present disclosure includes a vibration sensor and the aforementioned display system.

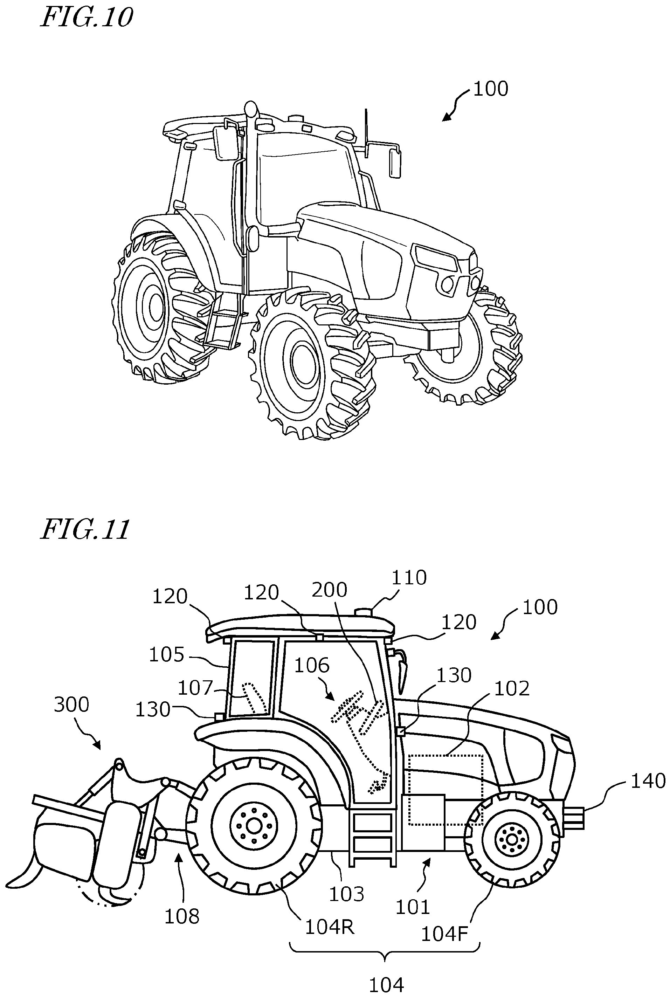

With reference to FIG. **10** to FIG. **13****,** an embodiment in which the techniques according to the present disclosure are applied to a work vehicle having the self-traveling function, e.g., a tractor as one example of an agricultural machine, will mainly be described. However, the self-traveling function is not essential. Without being limited to an agricultural machine such as a tractor, the techniques according to the present disclosure are also applicable to construction machines. Hereinafter, as an example, an embodiment in which a travel control system for realizing the self-traveling function is mounted in a work vehicle will be described. At least some functions of the travel control system may be implemented by another device (e.g., a server) that communicates with the work vehicle.

FIG. **10** is a perspective view showing an example appearance of the work vehicle **100** according to an embodiment of the present disclosure. FIG. **11** is a side view schematically showing an example of the work vehicle **100** having an implement **300** attached thereto. The work vehicle **100** according to an embodiment of the present disclosure is an agricultural tractor (work vehicle) having the implement **300** attached thereto. The work vehicle **100** is not limited to a tractor, and does not need to have the implement **300** attached thereto.

As shown in FIG. **11****,** the work vehicle **100** includes a vehicle body **101,** a prime mover (engine) **102,** and a transmission **103.** On the vehicle body **101,** running gear, which includes wheels **104** with tires, and a cabin **105** are provided. The running gear includes four wheels **104,** and axles to cause four wheels to rotate, and brakes to brake on each axle. The wheels **104** include a pair of front wheels **104F** and a pair of rear wheels 104R**.** Inside the cabin **105,** a driver's seat **107,** a steering device **106,** an operation terminal **200,** and switches for manipulation are provided. In the case where the work vehicle **100** performs tasked travel inside the field, the front wheels **104F** and/or the rear wheels 104R may be replaced by a plurality of wheels with a track (crawlers); rather than wheels with tires, attached thereto.

The work vehicle **100** may include at least one sensing device to sense the surrounding environment of the work vehicle **100,** and a processing unit to process sensor data that is output from the at least one sensing device. In the example shown in FIG. **11****,** the work vehicle **100** includes a plurality of sensing devices. The sensing devices include a plurality of cameras **120,** a LiDAR sensor **140,** and a plurality of obstacle sensors **130.**

The cameras **120** may be provided at the front/rear/right/left of the work vehicle **100,** for example. The cameras **120** image the surrounding environment of the work vehicle **100** and generate image data. The images acquired with the cameras **120** may be output to the processing unit mounted in the work vehicle **100,** and transmitted to a terminal device which is responsible for remote monitoring. The image may be displayed on the screen of the operation terminal **200,** for example. The cameras **120** may also be used to generate images to allow the work vehicle **100,** traveling on a road outside the field (an agricultural road or a general road), to recognize geographic features, obstacles, white lines, road signs, indications or the like in the surroundings.

The LiDAR sensor **140** in the example shown in FIG. **11** is disposed on a lower portion of a front surface of the vehicle body **101.** The LiDAR sensor **140** may be disposed at any other position. While the work vehicle **100** is traveling mainly outside the field, the LiDAR sensor **140** repeatedly outputs sensor data representing the distances and directions of measurement points on objects existing in the surrounding environment, or two-dimensional or three-dimensional coordinate values of such measurement points. The sensor data that is output from the LiDAR sensor **140** is processed by the controller of the work vehicle **100.** The controller can perform localization of the work vehicle **100** by matching the sensor data against the environment map. The controller can further detect an object such as an obstacle existing in the surroundings of the work vehicle **100** based on the sensor data. The controller can utilize an algorithm such as, for example, SLAM (Simultaneous Localization and Mapping) to generate or edit an environment map. The work vehicle **100** may include a plurality of LiDAR sensors disposed at different positions with different orientations.

The plurality of obstacle sensors **130** shown in FIG. **11** are provided at the front and the rear of the cabin **105.** The obstacle sensors **130** may be disposed at other positions. For example, one or more obstacle sensors **130** may be disposed at any position at the sides, the front, or the rear of the vehicle body **101.** The obstacle sensors **130** may include, for example, laser scanners or ultrasonic sonars. The obstacle sensors **130** may be used to detect obstacles in the surroundings during self-traveling to cause the work vehicle **100** to halt or detour around the obstacles. The LiDAR sensor **140** may be used as one of the obstacle sensors **130.**

The work vehicle **100** further includes a GNSS unit **110.** The GNSS unit **110** includes a GNSS receiver. The GNSS receiver may include an antenna to receive a signal(s) from a GNSS satellite(s) and a processor to calculate the position of the work vehicle **100** based on the signal(s) received by the antenna. The GNSS unit **110** receives satellite signals transmitted from the plurality of GNSS satellites, and performs positioning based on the satellite signals. GNSS is a collective term for satellite positioning systems such as the GPS (Global Positioning System), QZSS (Quasi-Zenith Satellite System, e.g., MICHIBIKI), GLONASS, Galileo, and BeiDou. Although the GNSS unit **110** according to an embodiment of the present disclosure is disposed above the cabin **105,** it may be disposed at any other position.

The GNSS unit **110** may include an IMU. Signals from the IMU can be used to complement position data. The IMU can measure a tilt or a small motion of the work vehicle **100.** The data acquired by the IMU can be used to complement the position data based on the satellite signals, so as to improve the performance of positioning.

The controller of the work vehicle **100** may utilize, for positioning, the sensor data acquired with the sensing devices such as the cameras **120** or the LIDAR sensor **140,** in addition to the positioning results provided by the GNSS unit **110.** In the case where objects serving as characteristic points exist in the environment that is traveled by the work vehicle **100,** as in the case of an agricultural road, a forest road, a general road, or an orchard, the position and the orientation of the work vehicle **100** can be estimated with a high accuracy based on data that is acquired with the cameras **120** or the LiDAR sensor **140** and on an environment map that is previously stored in the storage device. By correcting or complementing position data based on the satellite signals using the data acquired with the cameras **120** or the LiDAR sensor **140,** it becomes possible to identify the position of the work vehicle **100** with a higher accuracy.

The prime mover **102** may be a diesel engine, for example. Instead of a diesel engine, an electric motor may be used. The transmission **103** can change the propulsion and the moving speed of the work vehicle **100** through a speed changing mechanism. The transmission **103** can also switch between forward travel and backward travel of the work vehicle **100.**

The steering device **106** includes a steering wheel, a steering shaft connected to the steering wheel, and a power steering device to assist in the steering by the steering wheel. The front wheels **104F** are the wheels responsible for steering, such that changing their angle of turn (also referred to as "steering angle") can cause a change in the traveling direction of the work vehicle **100.** The steering angle of the front wheels **104F** can be changed by manipulating the steering wheel. The power steering device includes a hydraulic device or an electric motor to supply an assisting force for changing the steering angle of the front wheels **104F.** When automatic steering is performed, under the control of the controller disposed in the work vehicle **100,** the steering angle may be automatically adjusted by the power of the hydraulic device or the electric motor.

A linkage device **108** is provided at the rear of the vehicle body **101.** The linkage device **108** includes, e.g., a three-point linkage (also referred to as a "three-point link" or a "three-point hitch"), a PTO (Power Take Off) shaft, a universal joint, and a communication cable. The linkage device **108** allows the implement **300** to be attached to, or detached from, the work vehicle **100.** The linkage device **108** is able to raise or lower the three-point link with a hydraulic device, for example, thus changing the position or attitude of the implement **300.** Moreover, motive power can be sent from the work vehicle **100** to the implement **300** via the universal joint. While towing the implement **300,** the work vehicle **100** allows the implement **300** to perform a predetermined task. The linkage device may be provided at the front portion of the vehicle body **101.** In that case, the implement can be connected at the rear of the work vehicle **100.**

Although the implement **300** shown in FIG. **11** is a rotary tiller, the implement **300** is not limited to a rotary tiller. For example, any arbitrary implement such as a seeder, a spreader, a transplanter, a mower, a rake, a baler, a harvester, a sprayer, or a harrow, can be connected to the work vehicle **100** for use.

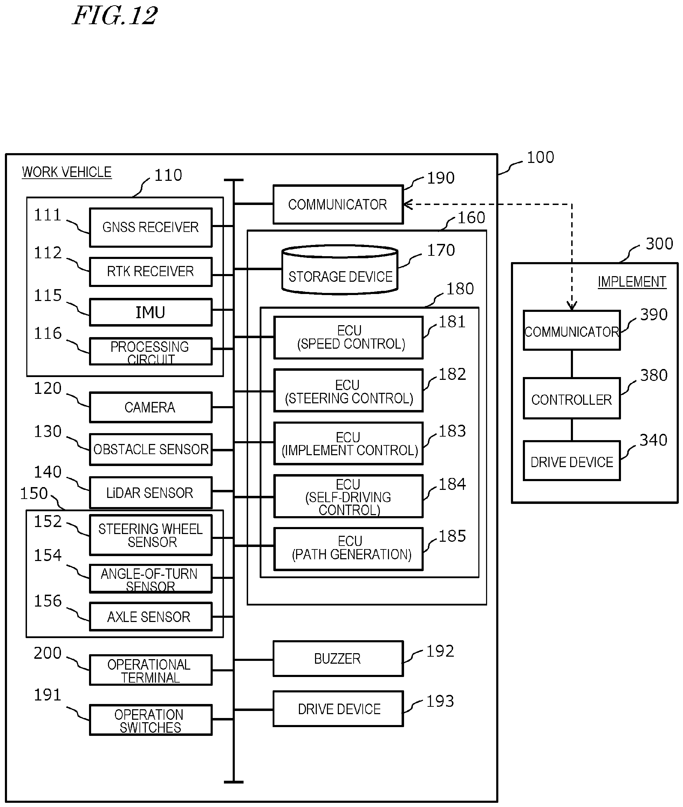

FIG. **12** is a block diagram showing an example configuration of the work vehicle **100** and the implement **300.** The work vehicle **100** and the implement **300** can communicate with each other via a communication cable that is included in the linkage device **108.** Via a network, the work vehicle **100** is able to communicate with a terminal device and a server that keeps agricultural work under management, for example.

In addition to the GNSS unit **110,** the cameras **120,** the obstacle sensors **130,** the LiDAR sensor **140,** and the operation terminal **200,** the work vehicle **100** in the example of FIG. **12** includes sensors **150** to detect the operating status of the work vehicle **100,** a control system **160,** a communicator **190,** operation switches **191,** a buzzer **192,** and a drive device **193.** These component elements are communicably connected to one another via a bus. The GNSS unit **110** includes a GNSS receiver **111,** an RTK receiver **112,** an IMU **115,** and a processing circuit **116.** The sensors **150** include a steering wheel sensor **152,** an angle-of-turn sensor **154,** and an axle sensor **156.** The control system **160** includes a storage device 170 and a controller **180.** The controller **180** includes a plurality of electronic control units (ECU) **181** to **185.** The implement **300** includes a drive device **340,** a controller **380,** and a communicator **390.** Note that FIG. **12** shows component elements which are relatively closely related to the operations of self-driving by the work vehicle **100,** while other components are omitted from illustration.

The GNSS receiver **111** in the GNSS unit **110** receives satellite signals transmitted from the plurality of GNSS satellites and generates GNSS data based on the satellite signals. The GNSS data is generated in a predetermined format such as, for example, the NMEA-0183 format. The GNSS data may include, for example, the ID number, the angle of elevation, the azimuth angle, and a value representing the reception intensity of each of the satellites from which the satellite signals are received.

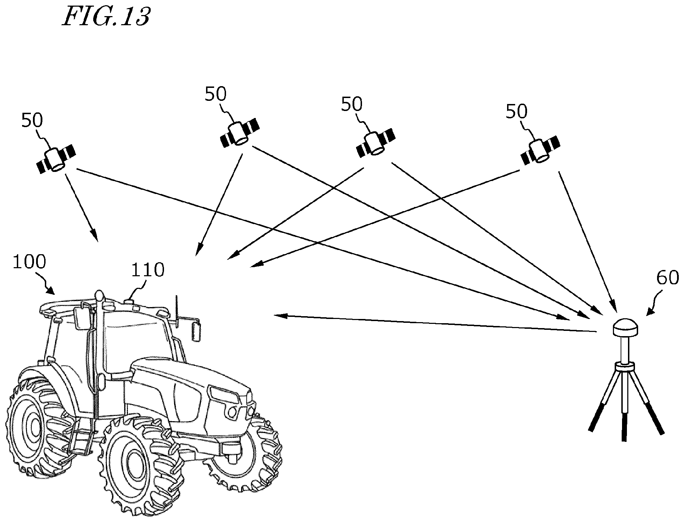

The GNSS unit **110** shown in FIG. **3** performs positioning of the work vehicle **100** by utilizing an RTK (Real Time Kinematic) -GNSS. FIG. **13** is a conceptual diagram showing an example of the work vehicle **100** performing positioning based on the RTK-GNSS. In the positioning based on the RTK-GNSS, not only satellite signals transmitted from a plurality of GNSS satellites **50,** but also a correction signal that is transmitted from a reference station **60** is used. The reference station **60** may be disposed near the field where the work vehicle **100** performs tasked travel (e.g., at a position within 10 km of the work vehicle **100).** The reference station **60** generates a correction signal of, for example, an RTCM format based on the satellite signals received from the plurality of GNSS satellites **50,** and transmits the correction signal to the GNSS unit **110.** The RTK receiver **112,** which includes an antenna and a modem, receives the correction signal transmitted from the reference station **60.** Based on the correction signal, the processing circuit **116** of the GNSS unit **110** corrects the results of the positioning performed by the GNSS receiver **111.** Use of the RTK-GNSS enables positioning with an accuracy on the order of several centimeters of errors, for example. Positional information including latitude, longitude, and altitude information is acquired through the highly accurate positioning by the RTK-GNSS. The GNSS unit **110** calculates the position of the work vehicle **100** as frequently as, for example, one to ten times per second.

Note that the positioning method is not limited to being performed by using an RTK-GNSS; any arbitrary positioning method (e.g., an interferometric positioning method or a relative positioning method) that provides positional information with the necessary accuracy can be used. For example, positioning may be performed by utilizing a VRS (Virtual Reference Station) or a DGPS (Differential Global Positioning System). In the case where positional information with the necessary accuracy can be obtained without the use of the correction signal transmitted from the reference station **60,** positional information may be generated without using the correction signal. In that case, the GNSS unit **110** does not need to include the RTK receiver **112.**

Even in the case where the RTK-GNSS is used, at a place where the correction signal from the reference station **60** cannot be acquired (e.g., on a road far from the field), the position of the work vehicle **100** is estimated by another method with no use of the signal from the RTK receiver **112.** For example, the position of the work vehicle **100** may be estimated by matching the data that is output from the LiDAR sensor **140** and/or the cameras **120** against a highly accurate environment map.

The GNSS unit **110** according to an embodiment of the present disclosure further includes the IMU **115.** The IMU **115** may include a 3-axis accelerometer and a 3-axis gyroscope. The IMU **115** may include a direction sensor such as a 3-axis geomagnetic sensor. The IMU **115** functions as a motion sensor which can output signals representing parameters such as acceleration, velocity, displacement, and attitude of the work vehicle **100.** Based not only on the satellite signals and the correction signal but also on a signal that is output from the IMU **115,** the processing circuit **116** can estimate the position and orientation of the work vehicle **100** with a higher accuracy. The signal that is output from the IMU **115** may be used for the correction or complementation of the position that is calculated based on the satellite signals and the correction signal. The IMU **115** outputs a signal more frequently than the GNSS receiver **111.** Utilizing this signal that is output highly frequently, the processing circuit **116** allows the position and orientation of the work vehicle **100** to be measured more frequently (e.g., about 10 Hz or above). Instead of the IMU **115,** a 3-axis accelerometer and a 3-axis gyroscope may be separately provided. The IMU **115** may be provided as a separate device from the GNSS unit **110.**

In an embodiment of the present disclosure, the IMU **115** functions as the aforementioned vibration sensor. However, the work vehicle **100** may include any other IMU that is different from the IMU **115** as a vibration sensor. The aforementioned controller **230** or **450** is communicatively connected to the IMU **115** via a bus, for example. As a result, the controller **230** or **450** can acquire data that is output from the IMU **115,** and measure the magnitude of vibration of the work vehicle **100.**

The cameras **120** are imagers that image the surrounding environment of the work vehicle **100.** Each camera **120** includes an image sensor such as a CCD (Charge Coupled Device) or a CMOS (Complementary Metal Oxide Semiconductor), for example. In addition, each camera **120** may include an optical system including one or more lenses and a signal processing circuit. During travel of the work vehicle **100,** the cameras **120** image the surrounding environment of the work vehicle **100,** and generate image (e.g., motion picture) data. The cameras **120** are able to capture motion pictures at a frame rate of 3 frames/second (fps: frames per second) or greater, for example. The images generated by the cameras **120** may be used by a remote supervisor to check the surrounding environment of the work vehicle **100** with the terminal device **400,** for example. The images generated by the cameras **120** may also be used for the purpose of positioning or detection of obstacles. As shown in FIG. **11****,** the plurality of cameras **120** may be provided at different positions on the work vehicle **100,** or a single camera **120** may be provided. A visible light camera(s) to generate visible light images and an infrared camera(s) to generate infrared images may be separately provided. Both of a visible light camera(s) and an infrared camera(s) may be provided as cameras for generating images for monitoring purposes. The infrared camera(s) may also be used for detection of obstacles at nighttime.

The obstacle sensors **130** detect objects existing in the surroundings of the work vehicle **100.** Each obstacle sensor **130** may include a laser scanner or an ultrasonic sonar, for example. When an object exists at a position within a predetermined distance from an obstacle sensor **130,** the obstacle sensor **130** outputs a signal indicating the presence of the obstacle. The plurality of obstacle sensors **130** may be provided at different positions on the work vehicle **100.** For example, a plurality of laser scanners and a plurality of ultrasonic sonars may be disposed at different positions on the work vehicle **100.** Providing such a great number of obstacle sensors **130** can reduce blind spots in monitoring obstacles in the surroundings of the work vehicle **100.**

The steering wheel sensor **152** measures the angle of rotation of the steering wheel of the work vehicle **100.** The angle-of-turn sensor **154** measures the angle of turn of the front wheels **104F,** which are the wheels responsible for steering. Measurement values by the steering wheel sensor **152** and the angle-of-turn sensor **154** are used for steering control by the controller **180.**

The axle sensor **156** measures the rotational speed, i.e., the number of revolutions per unit time, of an axle that is connected to the wheels **104.** The axle sensor **156** may be a sensor including a magnetoresistive element (MR), a Hall generator, or an electromagnetic pickup, for example. The axle sensor **156** outputs a numerical value indicating the number of revolutions per minute (unit: rpm) of the axle, for example. The axle sensor **156** is used to measure the speed of the work vehicle **100.**

The drive device **193** includes various types of devices required to cause the work vehicle **100** to travel and to drive the implement **300;** for example, the prime mover **102,** the transmission **103,** the steering device **106,** the linkage device **108** and the like described above. The prime mover **102** may include an internal combustion engine such as, for example, a diesel engine. The drive device **193** may include an electric motor for traction instead of, or in addition to, the internal combustion engine.

The buzzer **192** is an audio output device to present an alarm sound to alert the user of an abnormality. For example, the buzzer **192** may present an alarm sound when an obstacle is detected during self-driving. The buzzer **192** is controlled by the controller **180.**

The storage device **170** includes one or more storage media such as a flash memory or a magnetic disc. The storage device **170** stores various data that is generated by the GNSS unit **110,** the cameras **120,** the obstacle sensors **130,** the LiDAR sensor **140,** the sensors **150,** and the controller **180.** The data that is stored by the storage device **170** may include map data on the environment where the work vehicle **100** travels (environment map) and data on a target path for self-driving. The environment map includes information on a plurality of fields where the work vehicle **100** performs agricultural work and roads around the fields. The environment map and the target path may be generated by a processor in a server that keeps agricultural work under management. The controller **180** may have a function of generating or editing an environment map and a target path. The controller **180** can edit the environment map and the target path, acquired from the server, in accordance with the environment where the work vehicle **100** travels. The storage device **170** also stores data on a work plan received by the communicator **190** from the server.

The storage device **170** also stores a computer program(s) to cause each of the ECUs in the controller **180** to perform various operations described below. Such a computer program(s) may be provided to the work vehicle **100** via a storage medium (e.g., a semiconductor memory, an optical disc, etc.) or through telecommunication lines (e.g., the Internet). Such a computer program(s) may be marketed as commercial software.

The controller **180** includes the plurality of ECUs. The plurality of ECUs include, for example, the ECU **181** for speed control, the ECU **182** for steering control, the ECU **183** for implement control, the ECU **184** for self-driving control, and the ECU **185** for path generation.

The ECU **181** controls the prime mover **102,** the transmission **103,** and brakes included in the drive device **193,** thus controlling the speed of the work vehicle **100.**

The ECU **182** controls the hydraulic device or the electric motor included in the steering device **106** based on a measurement value of the steering wheel sensor **152,** thus controlling the steering of the work vehicle **100.**

In order to cause the implement **300** to perform a desired operation, the ECU **183** controls the operations of the three-point link, the PTO shaft and the like that are included in the linkage device **108.** Also, the ECU **183** generates a signal to control the operation of the implement **300,** and transmits this signal from the communicator **190** to the implement **300.**

Based on data output from the GNSS unit **110,** the cameras **120,** the obstacle sensors **130,** the LiDAR sensor **140,** and the sensors **150,** the ECU **184** performs computation and control for achieving self-driving. For example, the ECU **184** specifies the position of the work vehicle **100** based on the data output from at least one of the GNSS unit **110,** the cameras **120,** and the LiDAR sensor **140.** Inside the field, the ECU **184** may determine the position of the work vehicle **100** based only on the data output from the GNSS unit **110.** The ECU **184** may estimate or correct the position of the work vehicle **100** based on the data acquired with the cameras **120** or the LiDAR sensor **140.** Using the data acquired with the cameras **120** or the LiDAR sensor **140** allows the accuracy of the positioning to be further improved. Outside the field, the ECU **184** estimates the position of the work vehicle **100** by using the data output from the LiDAR sensor **140** or the cameras **120.** For example, the ECU **184** may estimate the position of the work vehicle **100** by matching the data output from the LiDAR sensor **140** or the cameras **120** against the environment map. During self-driving, the ECU **184** performs computation necessary for the work vehicle **100** to travel along a target path, based on the estimated position of the work vehicle **100.** The ECU **184** sends the ECU **181** a command to change the speed, and sends the ECU **182** a command to change the steering angle. In response to the command to change the speed, the ECU **181** controls the prime mover **102,** the transmission **103,** or the brakes to change the speed of the work vehicle **100.** In response to the command to change the steering angle, the ECU **182** controls the steering device **106** to change the steering angle.

During travel of the work vehicle **100,** based on data output from the cameras **120,** the obstacle sensors **130,** and the LiDAR sensor **140,** the ECU **185** recognizes obstacles existing in the surroundings of the work vehicle **100.** Moreover, the ECU **185** may determine a moving destination of the work vehicle **100** based on a work plan stored in the storage device **170,** and determine a target path from a start point to a destination point of movement of the work vehicle **100.**

Through the actions of these ECUs, the controller **180** realizes self-driving. During self-driving, the controller **180** controls the drive device **193** based on the measured or estimated position of the work vehicle **100** and on the target path. As a result, the controller **180** can cause the work vehicle **100** to travel along the target path. A plurality of ECUs included in the controller **180** may work in cooperation to perform these processes.

The plurality of ECUs included in the controller **180** can communicate with one another in accordance with a vehicle bus standard such as, for example, a CAN (Controller Area Network). Instead of a CAN, faster communication methods such as Automotive Ethernet (registered trademark) may be used. Although the ECUs **181** to **185** are illustrated as individual blocks in FIG. **12****,** the function of each of the ECU **181** to **185** may be implemented by a plurality of ECUs. Alternatively, an onboard computer that integrates the functions of at least some of the ECUs **181 to 185** may be provided. The controller **180** may include ECUs other than the ECUs **181** to **185,** and any number of ECUs may be provided in accordance with functionality. Each ECU includes a processing circuit including one or more processors.

The communicator **190** is a device including a circuit communicating with the implement **300,** the terminal device **400,** and a server that keeps agricultural work under management. The communicator **190** includes circuitry to perform exchanges of signals complying with an ISOBUS standard such as ISOBUS-TIM, for example, between itself and the communicator **390** of the implement **300.** This allows the implement **300** to perform a desired operation, or allows information to be acquired from the implement **300.** The communicator **190** may further include an antenna and a communication circuit to exchange signals via a network with the respective communicators of the terminal device and the server. The network may include a 3G, 4G, 5G, or any other cellular mobile communications network and the Internet, for example. The communicator **190** may have a function of communicating with a mobile terminal that is used by a supervisor who is situated near the work vehicle **100.** With such a mobile terminal, communication may be performed based on any arbitrary wireless communication standard, e.g., Wi-Fi (registered trademark), 3G, 4G, 5G or any other cellular mobile communication standard, or Bluetooth (registered trademark).

The drive device **340** in the implement **300** shown in FIG. **12** performs operations necessary for the implement **300** to perform predetermined work. The drive device **340** includes a device suitable for uses of the implement **300,** for example, a hydraulic device, an electric motor, a pump or the like. The controller **380** controls the operation of the drive device **340.** In response to a signal that is transmitted from the work vehicle **100** via the communicator **390,** the controller **380** causes the drive device **340** to perform various operations. Moreover, a signal that is in accordance with the state of the implement **300** can be transmitted from the communicator **390** to the work vehicle **100.**

An example operation of self-traveling of the work vehicle **100** will be described. The work vehicle **100** according to an embodiment of the present disclosure can automatically travel both inside and outside a field. Inside the field, the work vehicle **100** drives the implement **300** to perform predetermined agricultural work while traveling along a previously-set target path. Upon detecting an obstacle with the obstacle sensors **130** while traveling inside the field, the work vehicle **100** halts traveling and performs operations of presenting an alarm sound from the buzzer **192,** transmitting an alert signal to the terminal device and the like. Inside the field, the positioning of the work vehicle **100** is performed based mainly on data output from the GNSS unit **110.** On the other hand, outside the field, the work vehicle **100** automatically travels along a target path set for an agricultural road or a general road outside the field. While traveling outside the field, the work vehicle **100** utilizes the data acquired by the cameras **120** or the LiDAR sensor **140.** When an obstacle is detected outside the field, the work vehicle **100** avoids the obstacle or halts in that place. Outside the field, the position of the work vehicle **100** is estimated based on data output from the LiDAR sensor **140** or the cameras **120** in addition to positioning data output from the GNSS unit **110.**

The configurations and operations according to the above embodiments are only exemplary illustrations, and the present disclosure is not limited to the above embodiments. For example, various above embodiments may be combined as appropriate to provide another embodiment.

The display systems according to the foregoing embodiment may be mounted on a work vehicle (agricultural machine or a construction machine) lacking such functions as an add-on. Such systems may be manufactured and sold independently from the agricultural machine. A computer program for use in such systems may also be manufactured and sold independently from the work vehicle. The computer program may be provided in a form stored in a computer-readable, non-transitory storage medium, for example. The computer program may also be provided through downloading via telecommunication lines (e.g., the Internet).

Thus, the present disclosure encompasses display systems and work vehicles as recited in the following Items.

### [Item 1]

A display system to be mounted on a work vehicle including a vibration sensor, the display system including:
a screen; and
a controller to control displaying of an image on the screen and generate an image including an input interface to allow a user to perform an input operation and cause the image to be displayed on the screen, wherein
the controller changes an indicated position of the input interface on the screen based on a vibration of the work vehicle detected by the vibration sensor.

### [Item 2]

The display system of Item 1, wherein the controller keeps the indicated input interface stationary at a first predetermined position on the screen when a magnitude of vibration of the work vehicle as detected by the vibration sensor is below a threshold, and moves the indicated input interface from the first predetermined position when the magnitude of vibration of the work vehicle is equal to or above the threshold.

### [Item 3]

The display system of Item 2, wherein, when the magnitude of vibration of the work vehicle is equal to or above the threshold, the controller moves the indicated input interface from the first predetermined position in a same direction as a direction of a displacement in vibration of the work vehicle.

### [Item 4]

The display system of Item 2 or 3, wherein the screen is a touch screen panel.

### [Item 5]

The display system of Item 4, wherein,
the controller:
generate the image such that the image further includes at least one kind of information among information on the work vehicle, information on travel by the work vehicle, and information on work to be performed by the work vehicle, and cause the image to be displayed on the screen;
when the magnitude of vibration of the work vehicle is below the threshold, keep the indicated at least one kind of information stationary at a second predetermined position on the screen; and,
when the magnitude of vibration of the work vehicle is equal to or above the threshold, move the indicated at least one kind of information from the second predetermined position in a same direction as a direction of a displacement in vibration of the work vehicle.

### [Item 6]

The display system of Item 2 or 3 comprising:
a light source to be controlled by the controller; and
optics to create a virtual image ahead of the screen in response to received light that is emitted from the light source.

### [Item 7]

The display system of Item 6, wherein,
the controller:
generate the image such that the image further includes at least one kind of information among information on the work vehicle, information on travel by the work vehicle, and information on work to be performed by the work vehicle, and cause the image to be displayed on the screen;
when the magnitude of vibration of the work vehicle is below the threshold, keep the indicated at least one kind of information stationary at a second predetermined position on the screen; and,
when the magnitude of vibration of the work vehicle is equal to or above the threshold, move the indicated at least one kind of information from the second predetermined position in an opposite direction of a direction of a displacement in vibration of the work vehicle.

### [Item 8]

The display system of any of Items 1 to 7, wherein the input interface includes an input section with which to input at least one kind of information among information on the work vehicle, information on travel by the work vehicle, and information on work to be performed by the work vehicle.

### [Item 9]

A work vehicle comprising:
a vibration sensor; and
the display system of any of Items 1 to 8.

### INDUSTRIAL APPLICABILITY

The technique according to the present disclosure is applicable to display systems for agricultural machines or construction machines.

### REFERENCE SIGNS LIST

**50:** GNSS satellite; **60:** reference station; **100:** work vehicle; **101:** vehicle body; **102:** prime mover; **103:** transmission; **104:** wheel; **104F:** front wheel; **104R:** rear wheel; **105:** cabin; **106:** steering device; **107:** driver's seat; **108:** linkage device; **110:** GNSS unit; **111:** GNSS receiver; **112:** RTK receiver; **116:** processing circuit; **120:** camera; **130:** obstacle sensor; **140:** LiDAR sensor; **150:** sensors; **152:** steering wheel sensor; **154:** angle-of-turn sensor; **156:** axle sensor; **160:** control system; **170:** storage device; **180:** controller; **181** to **185:** ECU; **190:** communicator; **191:** operation switches; **192:** buzzer; **193:** drive device; **200:** operation terminal; **210:** input device; **220:** display device; **230, 450:** controller; **240:** ROM; **250:** RAM; **260:** storage device; **270:** communicator; **280:** input interface; **290:** indication ; **300:** implement; **340:** drive device; **380:** controller; **390:** communicator; **400:** HUD unit; **410:** light source; **420:** transmission-type screen; **430:** field lens; **440:** combiner; **480:** input interface; **491, 492:** indication; **500:** windshield; **600:** displaying region; **S:** screen

## Claims

1. A display system to be mounted on a work vehicle including a vibration sensor, the display system including:
a screen; and
a controller to control displaying of an image on the screen and generate an image including an input interface to allow a user to perform an input operation and cause the image to be displayed on the screen, wherein
the controller changes an indicated position of the input interface on the screen based on a vibration of the work vehicle detected by the vibration sensor.

2. The display system of claim 1, wherein the controller keeps the indicated input interface stationary at a first predetermined position on the screen when a magnitude of vibration of the work vehicle as detected by the vibration sensor is below a threshold, and moves the indicated input interface from the first predetermined position when the magnitude of vibration of the work vehicle is equal to or above the threshold.

3. The display system of claim 2, wherein, when the magnitude of vibration of the work vehicle is equal to or above the threshold, the controller moves the indicated input interface from the first predetermined position in a same direction as a direction of a displacement in vibration of the work vehicle.

4. The display system of claim 2, wherein the screen is a touch screen panel.

5. The display system of claim 4, wherein,
the controller:
generate the image such that the image further includes at least one kind of information among information on the work vehicle, information on travel by the work vehicle, and information on work to be performed by the work vehicle, and cause the image to be displayed on the screen;
when the magnitude of vibration of the work vehicle is below the threshold, keep the indicated at least one kind of information stationary at a second predetermined position on the screen; and,
when the magnitude of vibration of the work vehicle is equal to or above the threshold, move the indicated at least one kind of information from the second predetermined position in a same direction as a direction of a displacement in vibration of the work vehicle.

6. The display system of claim 2 comprising:
a light source to be controlled by the controller; and
optics to create a virtual image ahead of the screen in response to received light that is emitted from the light source.

7. The display system of claim 6, wherein,
the controller:
generate the image such that the image further includes at least one kind of information among information on the work vehicle, information on travel by the work vehicle, and information on work to be performed by the work vehicle, and cause the image to be displayed on the screen;
when the magnitude of vibration of the work vehicle is below the threshold, keep the indicated at least one kind of information stationary at a second predetermined position on the screen; and,
when the magnitude of vibration of the work vehicle is equal to or above the threshold, move the indicated at least one kind of information from the second predetermined position in an opposite direction of a direction of a displacement in vibration of the work vehicle.

8. The display system of claim 1, wherein the input interface includes an input section with which to input at least one kind of information among information on the work vehicle, information on travel by the work vehicle, and information on work to be performed by the work vehicle.

9. A work vehicle comprising:
a vibration sensor; and
the display system of any of claims 1 to 8.
